# FASCICULE DE BREVET EUROPEEN

(11) **EP 2 988 911 B1**
(45) Date de publication et mention de la délivrance du brevet: **12.09.2018**
(21) Numéro de dépôt: 14721809.3
(22) Date de dépôt: 25.04.2014
(51) Int. Cl.: B29B 15/12, D02G 3/40, B29K 311/10, B29C 70/46

(54) **PROCEDE DE FABRICATION D'UN MATERIAU COMPOSITE REALISE AVEC DES FILS DE FIBRES VEGETALES ET MATERIAU COMPOSITE REALISE SELON CE PROCEDE**
VERFAHREN ZUR HERSTELLUNG EINES VERBUNDWERKSTOFFES AUS EINEM PFLANZENFASERGARN UND IN DIESEM VERFAHREN HERGESTELLTER VERBUNDWERKSTOFF
METHOD OF PRODUCING A COMPOSITE MATERIAL MADE USING PLANT FIBRE YARN AND COMPOSITE MATERIAL MADE ACCORDING TO THIS METHOD

(30) Priorité: 26.04.2013 FR 1353824
(43) Date de publication de la demande: 02.03.2016
(73) Titulaire: CULTURE IN, 85600 Boufféré (FR)
(72) Inventeur: AMBS, David, 44190 Gorges (FR)
(74) Mandataire: Nony
(86) Numéro de dépôt international: PCT/EP2014/058509
(87) Numéro de publication internationale: WO 2014/174101

(56) Documents cités:
- WO-A1-2009/131149
- FR-A1- 2 958 663
- GB-A- 2 105 247
- US-A- 4 741 873

## Description

### 1. Domaine de l'invention

Le domaine de l'invention concerne les matériaux composites thermoplastiques servant de renforts, en particulier les matériaux composites réalisés à partir de fibres végétales et autres matériaux, notamment issus de ressources renouvelables, encore appelés bio-sourcés, ainsi que leur procédé de fabrication.

### 2. Solutions de l'art antérieur

Dans le domaine des matériaux composites, il est connu d'utiliser des fils enduits pour renforcer une matrice thermoplastique. Utilisés en fils ou mis en forme de structure textile (grille, tissu...), l'enduction thermoplastique permet par exemple d'améliorer l'accroche avec la matrice à renforcer ou d'améliorer l'accroche d'une enduction de surface dans le cas de textiles composites, qui constituent des matériaux composites souples. Dans les deux cas, cette amélioration se fait par simple compatibilité de matière. Les fils de base sont généralement constitués de multi-filaments de verre ou de polyester. Le matériau d'enduction est par exemple composé de silicone, de nitrile ou encore de PVC (polychlorure de vinyle).

Le procédé de fabrication consiste à enduire les fils, par exemple de verre, avec du PVC, puis à les mettre en forme pour obtenir une structure. On obtient un matériau composite fini (toile de transat, de store, par exemple), ou semi-fini (renfort de matrice ou d'enduction de surface). Il est à noter que la structure obtenue est obligatoirement souple car les fils enduits doivent être malléables pour être mis en forme. La structure textile peut éventuellement subir un traitement thermique pour créer un point de soudure à chaque croisement de fils et améliorer ainsi sa stabilité dimensionnelle.

L'étape d'enduction est réalisée, dans certains cas, par un passage en continu d'un ou plusieurs fils ou filaments dans un bain thermoplastique à base de solvant, à la sortie duquel les fils sont séchés en continu par évaporation du solvant et rembobinés en bout de ligne.

Une autre étape d'enduction connue consiste en une étape dite d'extrusion-gainage consistant à dérouler un ou plusieurs fils ou filaments en continu dans une filière en tête d'équerre alimentée par une extrudeuse. Le matériau thermoplastique d'enduction, extrudé à haute pression et à température de fusion, est appliqué sur la surface des fils ou filaments. En sortie de buse d'extrusion, les fils enduits de thermoplastique chaud sont directement refroidis dans un bain d'eau et rembobinés en bout de ligne.

On connaît par ailleurs de WO2009/131149 un fil composite pour résines renforcées de fibres, comprenant des fils incluant des fibres naturelles et des bandelettes de résine synthétique. Les fils juxtaposés forment une âme et les bandelettes de résine synthétique sont enroulées ou arrangées de manière parallèle autour de l'âme de fils.

### 3. Inconvénients des solutions de l'art antérieur

Un inconvénient de la technique d'extrusion-gainage est que cette technologie est difficilement exploitable pour des fils réalisés à partir de fibres végétales, les fils de fibres végétales n'étant soit pas assez résistants pour supporter les sollicitations mécaniques de ce procédé, soit pas assez réguliers pour obtenir une enduction régulière et fine. En effet, pour que le fil passe systématiquement dans la filière d'extrusion, il faut dimensionner le diamètre de buse en fonction du titrage maximum du fil. Le gainage thermoplastique sur fil de fibres végétales sera donc constamment irrégulier et en excès. De plus, la gaine thermoplastique se cloque généralement avant refroidissement à cause d'une mauvaise tenue du fil de fibres végétales au contact du matériau thermoplastique chaud.

La technique d'enduction par bain présente un inconvénient de difficulté de mise en oeuvre, les matières liquides du bain étant difficiles à manipuler et pouvant générer des risques sanitaires et/ou environnementaux en cours d'utilisation ou des problèmes de stockage. Par ailleurs, l'emploi de solvant nécessaire pour le bain n'est pas souhaitable en raison de son caractère peu écologique. Enfin, les matériaux thermoplastiques en phase liquide sont plutôt rares, ce qui risque de poser un problème d'approvisionnement du bain.

Un autre inconvénient de ces techniques connues est qu'elles ne permettent pas d'utiliser un matériau thermoplastique rigide comme matière d'enduction à cause du bobinage du fil en bout de ligne. En effet, cette étape de bobinage est difficilement mise en oeuvre sans casser le fil si le matériau d'enduction est rigide. De plus, même en réussissant à réaliser un stockage du fil sans le casser, l'utilisation de ce fil cassant pour la réalisation d'une structure textile est difficile.

Il résulte de ces éléments que les techniques d'enduction thermoplastique habituellement mises en oeuvre pour les fils ou multi-filaments de matière minérale ou organique ne peuvent être utilisées pour les fils de matière végétale, en particulier dans un cadre de développement écologique. Ces techniques ne permettent pas non plus l'utilisation de matériau thermoplastique de type rigide et cassant.

### 4. Objectifs de l'invention

L'invention vise à répondre à tout ou partie de ces inconvénients.

Plus précisément, un objectif de l'invention est de fournir un procédé de fabrication d'un matériau composite à base de fils de fibres végétales qui puisse être réalisé à partir de matériaux issus de ressources renouvelables.

L'invention a également pour objectif de fournir un procédé de fabrication d'un matériau composite à base de fils de fibres végétales qui soit performant et relativement aisé à mettre en oeuvre.

L'invention a encore pour objectif de fournir un procédé de fabrication d'un matériau composite à base de fils de fibres végétales qui soit totalement écologique.

Un autre objectif de l'invention est de fournir un matériau composite à base de fils de fibres végétales réalisé à partir de matières renouvelables.

### 5. Exposé de l'invention

Tout ou partie de ces objectifs, ainsi que d'autres qui apparaîtront plus clairement par la suite, sont atteints par l'invention à l'aide d'un procédé de fabrication d'un matériau composite, comportant les étapes suivantes :
a) réalisation d'un filé de fibres végétales, notamment de fibres de lin ;
b) enrobage dudit filé par enroulement de fibres ou filaments d'un matériau thermoplastique, notamment issu de ressources renouvelables, de manière à former un fil composite ;
c) chauffage dudit fil composite jusqu'à fusion dudit matériau thermoplastique.

Grâce à l'invention, l'enduction thermoplastique a lieu par voie sèche avant une étape de chauffage.

De plus, grâce au procédé conforme à l'invention, il est possible de fabriquer un matériau composite de renfort à partir de fils de fibres végétales. En effet, avant chauffage, le fil composite, réalisé à froid, reste souple et capable d'être enroulé sur une bobine, par exemple pour être stocké, sans risque de détérioration.

Avantageusement, le matériau thermoplastique est de type rigide, notamment avec un module d'Young relativement élevé. Après enrobage, le procédé peut comprendre une étape de bobinage, cette étape pouvant être mise en oeuvre avec des moyens conventionnels, quel que soit le matériau thermoplastique utilisé et surtout pour des quantités d'enduction relativement importante, jusqu'à 90% d'enduction de l'âme sans risque de casse des fils soumis aux sollicitations des procédés.

Le fil composite comporte ainsi, après l'étape b) du procédé, une structure de type âme-gaine, avec une âme constituée par le filé de fibres végétales et une gaine constituée par les fibres ou filaments du matériau thermoplastique.

Le chauffage du fil composite jusqu'à fusion et homogénéisation du matériau thermoplastique permet d'obtenir une enduction uniforme et resserrée sur l'âme. On obtient ainsi une structure âme-gaine resserrée. Le resserrement est en effet obtenu grâce à l'enroulement donné aux fibres ou filaments thermoplastiques par torsion autour du filé de fibres végétales.

Il n'est pas nécessaire d'appliquer de la pression pour cette étape de chauffage. En effet, l'air présent entre les fibres ou filaments thermoplastiques peut permettre une transmission de chaleur rapide de la couche supérieure, externe, jusqu'au coeur de l'enrobage, dans sa couche interne. On peut ainsi, sans apport de pression, apporter une quantité massique importante de matériau thermoplastique au fil composite. Par exemple, la quantité massique de matériau thermoplastique peut être comprise entre 20% et 90%, par exemple comprise entre 30% et 90%, notamment entre 50% et 90%, par exemple supérieure ou égale à 60% par rapport à la masse totale du fil composite.

L'enrobage par enroulement des fibres ou filaments de matériau thermoplastique autour de l'âme favorise l'homogénéisation de la gaine, sans apport de pression. Les fibres ou filaments thermoplastiques sont préformées en spires autour du fil d'âme, et l'apport de chaleur provoque le resserrement et l'homogénéisation de ces spires en matériau thermoplastique autour du fil d'âme.

La température de chauffage dépend notamment du matériau thermoplastique choisi puisqu'elle correspond à la température de fusion de ce matériau, tandis que la durée de chauffage est fonction, par exemple, de la quantité ou pourcentage d'enduction de fibres thermoplastiques appliquées et de la vitesse de défilement dans le cas d'un procédé en continu. Il est à noter que l'utilisation d'un enrobage par des fibres ou filaments thermoplastiques ne nécessite pas une quantité de chaleur très élevée par rapport à celle qui serait nécessaire pour faire fondre la même quantité d'un tel matériau sous une autre forme, par exemple sous forme de bandes ou de plaques. Ceci permet une diminution de la durée de chauffage qui est fonction de la température de chauffage et du pourcentage massique de fibres ou filaments thermoplastiques par rapport à la masse totale du fil composite. Pour un matériau thermoplastique d'une température de fusion à 190°C, la durée de chauffage peut être par exemple comprise entre 10s et 5min, par exemple entre 10s et 2 min, notamment entre 10s et 1min. On pourra ainsi avoir par exemple une durée de chauffage de 30s à 190°C pour 60% massique de fibres ou filaments thermoplastiques. Dans un autre exemple, on pourra avoir une durée de chauffage de 10s à 240°C pour 60% massique de fibres ou filaments thermoplastiques.

Le procédé de fabrication conforme à l'invention peut en outre comporter une étape de mise en forme d'au moins un fil composite en une structure textile, cette étape de mise en forme étant mise en oeuvre avant l'étape c) de chauffage du fil composite.

L'apport en matériau thermoplastique peut être élevé, par exemple supérieur en pourcentage massique à 50% par rapport à la masse totale du fil composite, le fil composite reste souple et peut être mis en forme de structure textile à l'aide de machine conventionnelles, par exemple de matériel de tissage conventionnel. L'apport en matériau thermoplastique peut être relativement faible, par exemple inférieur en pourcentage massique à 50%, notamment supérieur ou égal à 20% par rapport à la masse totale du fil composite, avec un mouillage de l'âme, c'est-à-dire un recouvrement de l'âme par le matériau thermoplastique après chauffage, pouvant être assuré jusqu'à 100%.

La mise en forme selon une structure textile d'au moins un des fils composites fabriqués selon les étapes a) et b) ci-dessus permet de réaliser une structure de renfort pouvant être utilisée comme matériau de renfort. Une telle structure présente l'avantage de pouvoir être stockée avant chauffage. Il y a pré-enduction dans le cas d'un fil et pré-imprégnation dans le cas d'une structure textile.

La réalisation de cette structure textile avant chauffage permet, à chaque croisement entre deux fils composites, de former, après chauffage, un point de soudure entre ces deux fils composites, ce qui renforce encore davantage le matériau composite ainsi obtenu. Le matériau est consolidé par soudure des points de croisement ou de contact des fils composites formant la structure textile.

Le procédé de fabrication conforme à l'invention peut en outre avantageusement comporter une étape d) de refroidissement du matériau composite obtenu. La mise en oeuvre de cette étape de refroidissement peut dépendre, comme pour le chauffage, essentiellement du matériau thermoplastique, de la quantité de fibres thermoplastiques appliquées et de la vitesse de défilement du procédé, le cas échéant.

L'étape de mise en forme peut être choisie dans le groupe constitué par l'unidirectionnel, le tissage, le tressage, l'enroulement et le tricotage, la structure textile étant alors constituée par un ou plusieurs fils unidirectionnels, un tissé, un tricot, une tresse, un non-tissé (notamment par assemblage de fils unidirectionnels coupés), un enroulement filamentaire ou une composition formée de tout ou partie de ceux-ci.

Le type de structure textile formant le matériau composite sera choisi en fonction de l'utilisation prévue dudit matériau composite.

Le procédé peut comprendre, après l'étape a) et/ou b) et/ou après l'étape de mise en forme l'embobinage du filé, du fil composite ou de la structure textile, cette étape pouvant être suivie, avant l'étape suivante, d'une étape de débobinage, le cas échéant. Cette étape peut être nécessaire pour le stockage du fil ou de la structure, notamment en vue de son transport, de son stockage, ou de son passage à une autre ligne de production.

Le procédé de fabrication d'un matériau composite peut également comprendre, après l'étape de mise en forme et après ou pendant l'étape c) de chauffage du fil composite, une étape d'insertion, notamment à chaud et sous pression, de ladite structure textile dans une matrice comportant un matériau thermoplastique complémentaire, notamment compatible voire identique au matériau thermoplastique du fil composite, la matrice étant présente sur au moins une face de la structure textile.

Ainsi, la structure textile intervient comme renfort d'une matrice de matériau thermoplastique. Dans ce cas, l'étape c) de chauffage peut être réalisée pendant l'insertion dans la matrice de matériau thermoplastique complémentaire, surtout si les matériaux thermoplastiques sont de même nature et donc de température de fusion identique, quelle que soit la forme de la matrice qui peut être en poudre, en granules, en film ou en feuille ou autre.

L'insertion peut être totale, notamment sur les deux faces de la structure textile, avec chauffage de l'ensemble, ou partielle, par exemple sur une des faces seulement de la structure textile. Dans ce dernier cas, la fusion des fibres thermoplastiques peut être partielle, auquel cas les fils composites pourront ne pas être fondus sur la face non insérée dans la matrice. Dans ce cas, le matériau composite pourra rester souple.

Le matériau thermoplastique complémentaire de la matrice est avantageusement identique ou au moins compatible avec le matériau thermoplastique du fil composite de manière à permettre une adhérence totale dans le matériau composite final.

Dans le cas de la présence de cette étape d'insertion, le matériau thermoplastique complémentaire de la matrice peut se présenter, avant son ajout, sous forme de film, de feuille, de poudre et/ou de granulés.

L'insertion dans une matrice de matériau thermoplastique complémentaire peut être effectuée, dans un mode de réalisation particulier, sur les deux faces de la structure textile. Dans ce dernier cas, la structure textile est prise en « sandwich » dans la matrice, entre deux couches de matériau thermoplastique complémentaire.

L'invention a encore pour objet, en combinaison avec ce qui précède, un matériau composite réalisé à partir de fils de fibres végétales, obtenu selon le procédé de fabrication tel que défini plus haut et comprenant un fil composite comportant au moins une âme réalisée en un filé de fibres végétales et une gaine formée par enroulement de fibres ou filaments d'un matériau thermoplastique autour de l'âme et chauffée jusqu'à fusion du matériau thermoplastique.

Grâce à l'invention, on dispose d'un matériau composite réalisé à partir de fils de fibres végétales pouvant servir de renfort pour tout objet ou structure.

Les fibres végétales peuvent être choisies dans le groupe constitué par le lin, le chanvre, le coton, le jute, l'ortie, le sisal, le coco et plus généralement toute fibre végétale pouvant être filée.

Grâce à cet aspect de l'invention, le procédé permet un développement écologique et durable pouvant s'adapter aux ressources locales.

Le matériau thermoplastique peut être issu de ressources renouvelables, encore appelé « bio-sourcé ». Le matériau thermoplastique peut être choisi dans le groupe constitué par : le PLA (Poly Acide Lactique), le PHA (Poly Hydroxy Alcanoate), le PET (Polyéthylène téréphtalate), le PA (PolyAmide), le PP (Polypropylène), le PBT (PolyButylène Téréphtalate), le PE (Polyéthylène), le PBS (PolyButylène Succinate), le PU (PolyUréthane), le PC (PolyCarbonate), le PVC (PolyChlorure de Vinyle) et plus généralement, tout matériau thermoplastique disponible en fibres ou filaments dont la température de fusion sera au plus égale, mieux sensiblement inférieure par rapport à la température de dégradation des fibres végétales choisies pour le fil d'âme, par exemple, notamment par sécurité, d'au moins 10°C inférieure par rapport à la température de dégradation des fibres végétales choisies pour le fil d'âme.

Il est à noter que la température de dégradation des fibres végétales est comprise entre 200°C et 230°C. La température de fusion du PLA est environ comprise entre 150°C et 200°C.

Le matériau composite peut, dans un mode de réalisation particulier, comprendre une structure textile réalisée par mise en forme d'au moins un fil composite, la structure textile consistant en un ou plusieurs fils unidirectionnels, un tissé, un tricot, une tresse, un non-tissé, un enroulement filamentaire ou une composition formée de tout ou partie de ceux-ci.

Dans ce cas, la structure textile, notamment lorsqu'elle présente deux faces, peut être insérée, sur au moins une face, voire sur deux faces, dans une matrice d'un matériau thermoplastique complémentaire, notamment compatible voire identique au matériau thermoplastique.

L'invention a encore pour objet, en combinaison avec ce qui précède, un objet, notamment écran, mobilier, bagagerie, produit d'agencement ou de revêtement d'intérieur comportant au moins une partie renforcée à l'aide du matériau composite réalisé à partir de matériaux naturels et tel que défini plus haut.

### 4. Liste des figures

D'autres caractéristiques et avantages de l'invention apparaîtront à la lecture de la description suivante d'un mode de réalisation préférentiel, donné à titre d'exemple indicatif et non limitatif, et des dessins annexés, parmi lesquels :
- la figure 1 illustre de manière schématique et partielle un filé de fibres végétales utilisé pour la mise en oeuvre du procédé de fabrication conforme à l'invention et pour la réalisation du matériau composite selon l'invention,
- la figure 2 illustre de manière schématique et partielle un fil composite réalisé dans le cadre du procédé de fabrication conforme à l'invention, avant chauffage,
- la figure 3 illustre de manière schématique l'étape de chauffage du procédé de fabrication conforme à l'invention,
- la figure 4 illustre de manière schématique le fil composite de la figure 2, après chauffage,
- la figure 5 illustre de manière schématique et partielle, en perspective vue en coupe transversale, le fil composite de la figure 4,
- la figure 6 illustre de manière schématique et partielle, en vue de face, un exemple de structure textile pouvant être réalisée avec des fils composites similaires à celui de la figure 2 au cours du procédé de fabrication conforme à l'invention, avant chauffage,
- la figure 7 illustre en coupe transversale, partielle et schématique la structure textile de la figure 6,
- la figure 8 illustre de manière schématique et partielle, en vue de face, la structure textile de la figure 6 après chauffage,
- la figure 9 est une représentation schématique et partielle, en coupe transversale, du matériau composite obtenu selon un mode de réalisation du procédé de fabrication de l'invention,
- la figure 10 représente de manière schématique et partielle une étape d'insertion de la structure textile dans une matrice sur deux côtés de la structure, et
- la figure 11 représente de manière schématique et partielle une étape d'insertion de la structure textile dans une matrice sur un seul côté de la structure.

### 5. Description détaillée d'un mode de réalisation de l'invention

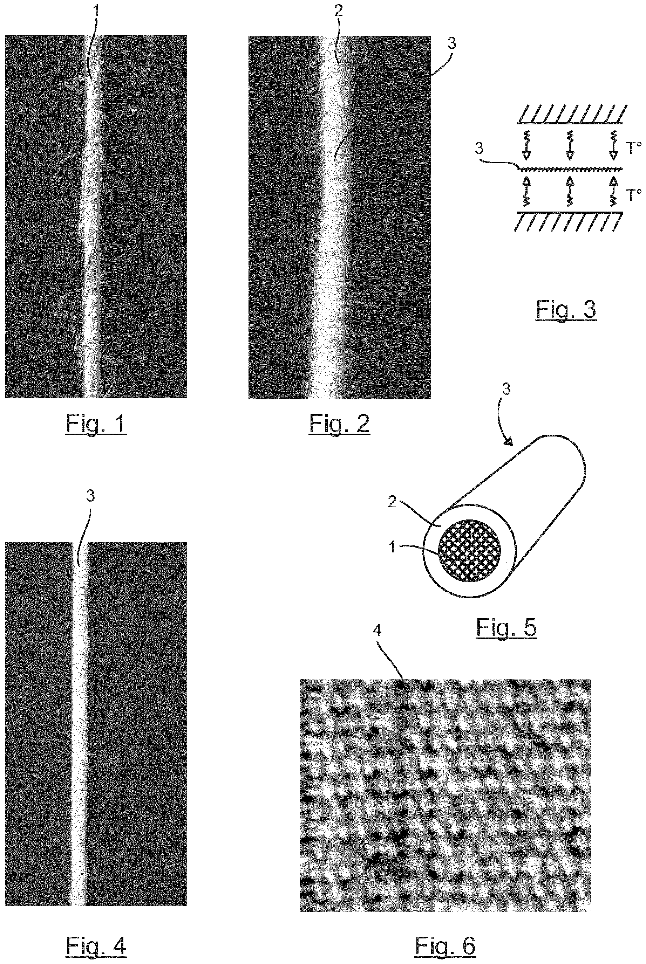

On a représenté sur la figure 1 un filé 1 de fibres végétales.

Dans cet exemple, les fibres végétales sont des fibres de lin. Le titrage du filé de fibres est de 6Nm (Nm pour numéro métrique), c'est-à-dire que 6 mètres de ce filé pèsent 1 gramme. Le filé est par exemple réalisé en filature au sec par torsion de fibres d'étoupe de peignage. Il est à noter que cette étape peut avoir lieu dans une usine spécialisée, qui peut différer de l'usine de fabrication du matériau composite.

La figure 1 illustre ainsi la première étape du procédé de fabrication d'un matériau composite réalisé à partir de matériaux conforme à l'invention, qui consiste à réaliser au moins un filé 1 de fibres végétales.

Il est à noter que la réalisation d'un filé de fibres végétales est nécessaire pour assurer la solidité ultérieure du fil composite, le filé formant une âme continue, l'utilisation de fibres végétales sans lien entre elles ne permettant pas à l'inverse d'obtenir une telle propriété.

La figure 2 illustre le résultat de la deuxième étape du procédé de fabrication conforme à l'invention, consistant à enrober ledit filé 1 par enroulement de fibres ou filaments d'un matériau thermoplastique 2, de manière à former un fil composite 3.

Dans l'exemple illustré, le matériau thermoplastique est du PLA (Poly Acide Lactique) qui est un matériau thermoplastique rigide issu de ressources renouvelables et classé dans les matériaux thermoplastiques les plus rigides, avec un module d'Young E = 3,5GPa, similaires au PVC dit rigide ou au PS cristal. Dans cet exemple, les fibres ou filaments du matériau thermoplastique 2 sont constituées de fibres de PLA de 3,3 dtex (équivalent à 10 000 mètres de ces fibres pèsent 3,3 g), chaque fibre ayant une longueur de 40 mm environ. Il est à noter que l'invention, notamment par l'enrobage à l'aide de fibres ou filaments de matériau thermoplastique, permet d'utiliser des matériaux thermoplastiques rigides, à une quantité massique relativement importante, par exemple supérieure à 50% de la masse totale du fil composite, sans pour autant altérer la souplesse du fil composite.

Le fil composite 3 ainsi formé est réalisé, dans cet exemple, par filature à friction avec, comme indiqué plus haut, le filé 1 de fibres végétales formant une âme et les fibres de matériau thermoplastique 2 formant la gaine par enroulement autour de l'âme.

La proportion massique de fibres de PLA, dans l'exemple illustré, est de 60 % par rapport à la masse totale du fil composite 3. Le fil composite 3 a donc un titrage de 2,4Nm.

Il est à noter que l'enrobage formé par les fibres ou filaments du matériau thermoplastique 2 autour du filé 1 de fibres végétales consiste en le recouvrement uniforme du matériau thermoplastique sur l'âme continue, de façon à ne plus distinguer le fil de fibres végétales. Il est à noter que l'enroulement des fibres ou filaments de matériau thermoplastique autour de l'âme forme en lui-même un recouvrement et non une enduction (au sens de non lisse et non étanche), ce qui est dû à la différence de chauffage. La surface d'échange thermique développée par les fibres ou filaments de matériau thermoplastique 2 pour 1 m de fil composite 3 est par exemple d'environ 1,5 m². Grâce à cette surface d'échange de taille considérable, le transfert thermique est très élevé, ne nécessitant pas d'ajout de pression lors de l'étape ultérieure de chauffage du fil composite 3. La fusion de l'enrobage se fait pratiquement simultanément en surface et au coeur.

On a représenté sur la figure 3 de manière schématique l'étape de chauffage du fil composite 3 à la température de fusion des fibres thermoplastiques 2.

La figure 4 illustre le fil composite 3 après chauffage. Dans cette configuration, le fil composite 3 est enduit, étant lisse et régulier. La figure 5 illustre également ce fil composite 3 après chauffage, en vue en section de manière à distinguer la structure âme-gaine du fil composite 3.

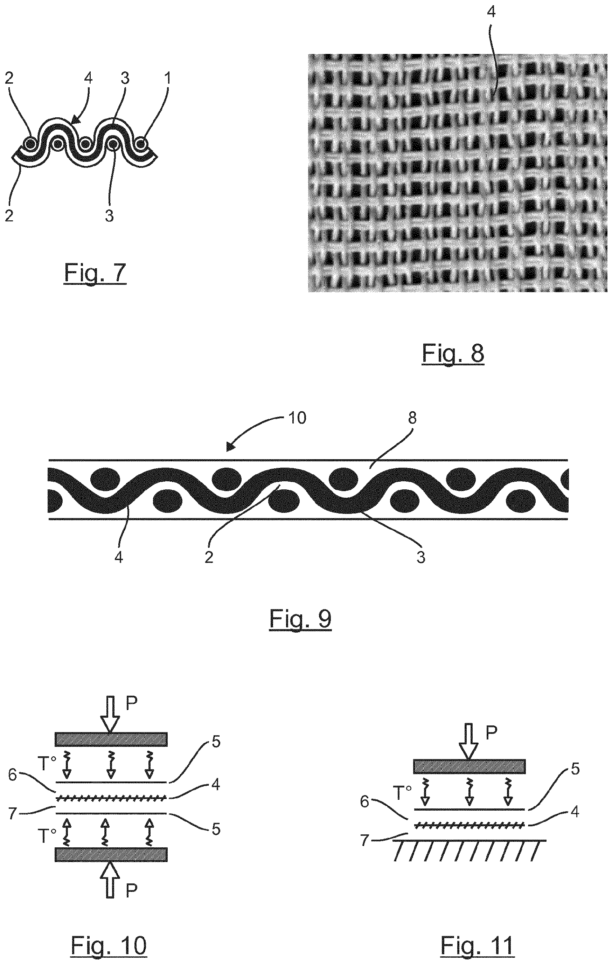

On a représenté sur la figure 6 la réalisation, avant chauffage, d'une structure textile 4, dans cet exemple un tissé en armure toile réalisée avec le fil composite 3 en chaîne et en trame, avant chauffage (c'est-à-dire dans leur état illustré sur la figure 2). Comme visible sur la figure 7, la structure textile 4 de la figure 6 consiste en un tissage régulier de fils composites 3.

Le procédé de fabrication illustré comporte l'étape consistant à consolider la structure textile 4 par fusion de fibres thermoplastiques. On obtient alors une structure textile composite consolidée visible sur la figure 8. La structure textile est consolidée par des points de soudure à chaque croisement de fils composites 3, grâce au chauffage et à la présence de matériau thermoplastique.

Dans un autre mode de réalisation, l'étape de chauffage par fusion des fibres thermoplastiques a lieu en même temps que l'insertion de la structure textile de renfort dans une matrice. Une étape complémentaire illustrée sur la figure 10 permet de la compléter à l'aide d'un matériau thermoplastique complémentaire 5 formant la matrice, le matériau thermoplastique complémentaire 5 venant s'ajouter, dans cet exemple sur chacune des faces 6 et 7 de la structure textile 4. Dans cet exemple, le matériau thermoplastique complémentaire 5 sur chaque face 6 et 7, la structure textile 4 est prise en sandwich entre des feuilles de matériau thermoplastique complémentaire 5 et se retrouve ainsi en insertion complète dans la matrice. Le matériau thermoplastique complémentaire 5 est dans cet exemple du PLA, tout comme le matériau thermoplastique d'enrobage.

Le matériau composite 10 ainsi obtenu est illustré en coupe sur la figure 9, avec la matrice 8 formée du matériau thermoplastique complémentaire 5 dans laquelle est intégrée la structure textile 4.

En variante, illustrée sur la figure 11, le matériau thermoplastique complémentaire 5 est ajouté sur une seule face 6 de la structure textile 4. Il est à noter que, également dans cette variante, la structure textile 4 est chauffée partiellement, sur sa face 6, et non sur sa face 7 qui reste alors dans l'état tel qu'illustré sur la figure 6.

Il est à noter qu'on ne sort pas du cadre de l'invention si l'on réalise non pas une structure textile 4 complexe mais un fil composite 3 après chauffage jusqu'à fusion du matériau thermoplastique 2.

La structure textile peut être constituée par un tissé, mais également par un tricot, une tresse, un non-tissé, un enroulement filamentaire ou une composition formée de tout ou partie de ceux-ci.

L'ajout d'un matériau thermoplastique complémentaire 5 peut permettre d'obtenir une finition directement utilisable.

Il est à noter que si l'on chauffe à nouveau le matériau composite 10 selon l'invention, obtenu selon le procédé de fabrication de l'invention, celui-ci peut être mis en forme et relativement malléable, étant formé de matériaux polymères thermoplastiques.

Il est également à noter que le fil composite 3 illustré sur la figure 4, la structure textile 4 illustrée sur la figure 8 et le matériau composite 10 de la figure 9 constituent trois exemples de matériaux composites réalisés grâce au procédé de l'invention.

Dans toute la description, les expressions « comprenant un » et « comportant un » doivent être comprises comme étant synonymes respectivement des expressions « comprenant au moins un » et « comportant au moins un » sauf si le contraire est spécifié.

Dans toute la description, les plages de valeurs sont comprises comme incluant les bornes, sauf si le contraire est spécifié.

## Revendications

1. Procédé de fabrication d'un matériau composite (3, 4, 10), comportant les étapes suivantes :
a) réalisation d'un filé (1) de fibres végétales;
b) enrobage dudit filé (1) par enroulement de fibres ou filaments d'un matériau thermoplastique (2), de manière à former un fil composite (3) ;
c) chauffage dudit fil composite (3) jusqu'à fusion dudit matériau thermoplastique (2).

2. Procédé de fabrication selon la revendication 1, comportant l'étape de mise en forme d'au moins un fil composite (3) en une structure textile (4), cette étape de mise en forme étant mise en oeuvre avant l'étape c) de chauffage du fil composite (3), de manière à permettre la fusion du matériau thermoplastique (2).

3. Procédé de fabrication selon la revendication 2, dans lequel l'étape de mise en forme est choisie dans le groupe constitué par l'unidirectionnel, le tissage, le tressage, l'enroulement, et le tricotage, la structure textile (4) étant constituée par un ou plusieurs fils unidirectionnels, un tissé, un tricot, une tresse, un non-tissé, un enroulement filamentaire ou une composition formée de tout ou partie de ceux-ci.

4. Procédé de fabrication d'un matériau composite (10) selon la revendication 2 ou 3, comprenant, après l'étape de mise en forme et après ou pendant l'étape c) de chauffage du fil composite (3), une étape d'insertion complète ou partielle, notamment à chaud et sous pression, de la structure textile (4) dans une matrice (8) comportant un matériau thermoplastique complémentaire (5), notamment compatible voire identique au matériau thermoplastique (2) du fil composite (3), la matrice étant présente sur au moins une face (6 ; 7) de la structure textile (4).

5. Procédé de fabrication d'un matériau composite (10) selon la revendication 4, **caractérisé en ce que** l'insertion dans le matériau thermoplastique complémentaire (5) est effectuée sur les deux faces (6, 7) de la structure textile (4).

6. Matériau composite (3, 4, 10), obtenu selon le procédé de fabrication selon l'une quelconque des revendications 1 à 5 et comprenant au moins un fil composite (3) comportant au moins une âme réalisée en un filé (1) de fibres végétales et une gaine formée par enroulement de fibres ou filaments d'un matériau thermoplastique (2) autour de l'âme et chauffée jusqu'à fusion du matériau thermoplastique.

7. Matériau composite (3, 4, 10) selon la revendication précédente, dans lequel les fibres végétales sont choisies dans le groupe constitué par le lin, le chanvre, le coton, le sisal, le jute, l'ortie, le coco et toute fibre végétale apte à être filée.

8. Matériau composite (3, 4, 10) selon l'une des deux revendications immédiatement précédentes, dans lequel le matériau thermoplastique (2) est issu de ressources renouvelables et est choisi dans le groupe constitué par : le PLA (Poly Acide Lactique), le PHA (Poly Hydroxy Alcanoate), le PET (Polyéthylène téréphtalate), le PA (PolyAmide), le PP (Polypropylène), le PBT (PolyButylène Téréphtalate), le PE (Polyéthylène), le PBS (PolyButylène Succinate), le PU (PolyUréthane), le PC (PolyCarbonate), le PVC (PolyChlorure de Vinyle) et tout matériau thermoplastique en fibres ou filaments dont la température de fusion est au plus égale, notamment sensiblement inférieure à la température de dégradation des fibres végétales choisies pour le fil d'âme.

9. Matériau composite (4, 10) selon l'une quelconque des revendications 6 à 8, comprenant une structure textile (4) réalisée par mise en forme d'au moins un fil composite (3), la structure textile (4) consistant en un ou plusieurs fils 30 unidirectionnels, un tissé, un tricot, une tresse, un non-tissé, un enroulement filamentaire ou une composition formée de tout ou partie de ceux-ci.

10. Matériau composite (10) selon la revendication précédente, inséré, sur au moins une face (6 ; 7) de la structure textile, dans une matrice (8) comportant un matériau thermoplastique complémentaire (5).

11. Objet, notamment écran, mobilier, bagagerie, produit d'agencement ou de revêtement comportant au moins une partie renforcée à l'aide d'au moins un matériau composite (3, 4, 10), selon l'une quelconque des revendications 6 à 10.

## Patentansprüche

1. Verfahren zur Herstellung eines Verbundmaterials (3, 4, 10), das die folgenden Schritte aufweist:
a) Fertigung eines Fasergarns (1) aus Pflanzenfasern;
b) Umhüllung des Fasergarns (1) durch Umwickeln mit Fasern oder Filamenten aus einem thermoplastischen Material (2), um einen Verbundfaden (3) auszubilden;
c) Erhitzen des Verbundfadens (3) bis zum Schmelzen des thermoplastischen Materials (2).

2. Herstellungsverfahren nach Anspruch 1, das den Schritt des Formens zumindest eines Verbundfadens (3) zu einer Textilstruktur (4) aufweist, wobei dieser Schritt des Formen vor dem Schritt c) des Erhitzens des Verbundfadens (3) erfolgt, um das Schmelzen des thermoplastischen Materials (2) zuzulassen.

3. Herstellungsverfahren nach Anspruch 2, wobei der Schritt des Formens aus der Gruppe, bestehend aus unidirektionalem Verbinden, Weben, Flechten, Wickeln und Stricken, ausgewählt ist, wobei die Textilstruktur (4) aus einem oder mehreren unidirektionalen Fäden, einem Gewebe, einem Gestrick, einem Geflecht, einem Vlies, einer Filamentwicklung oder einer ganz oder teilweise aus selbigen ausgebildeten Zusammensetzung gebildet ist.

4. Verfahren zur Herstellung eines Verbundmaterials (10) nach Anspruch 2 oder 3, umfassend nach dem Schritt des Formens und nach oder während des Schritts c) des Erhitzens des Verbundfadens (3) einen insbesondere unter Wärme und Druck erfolgenden Schritt des vollständigen oder partiellen Einbringens der Textilstruktur (4) in eine Matrix (8), die ein zusätzliches thermoplastisches Material (5) aufweist, das insbesondere mit dem thermoplastischen Material (2) des Verbundfadens (3) kompatibel oder sogar identisch ist, wobei die Matrix auf zumindest einer Seite (6; 7) der Textilstruktur (4) vorhanden ist.

5. Verfahren zur Herstellung eines Verbundmaterials (10) nach Anspruch 4, **dadurch gekennzeichnet, dass** das Einbringen in das zusätzliche thermoplastische Material (5) auf den beiden Seiten (6, 7) der Textilstruktur (4) erfolgt.

6. Verbundmaterial (3, 4, 10), das nach dem Herstellungsverfahren nach einem der Ansprüche 1 bis 5 erhalten wird und zumindest einen Verbundfaden (3) umfasst, der zumindest einen aus einem Fasergarn (1) aus Pflanzenfasern gefertigten Kern und eine durch Umwickeln des Kerns mit Fasern oder Filamenten aus einem thermoplastischem Material (2) ausgebildete und bis zum Schmelzen des thermoplastischen Materials erhitzte Hülle aufweist.

7. Verbundmaterial (3, 4, 10) nach dem vorangehenden Anspruch, wobei die Pflanzenfasern aus der Gruppe, bestehend aus Leinen, Hanf, Baumwolle, Sisal, Jute, Nessel, Kokos und jeder spinnbaren Pflanzenfaser, ausgewählt sind.

8. Verbundmaterial (3, 4, 10) nach einem der beiden unmittelbar vorangehenden Ansprüche, wobei das thermoplastische Material (2) aus erneuerbaren Ressourcen stammt und aus der Gruppe, bestehend aus: PLA (Polylactid), PHA (Polyhydroxyalkanoat), PET (Polyethylenterephtalat), PA (Polyamid), PP (Polypropylen), PBT (Polybutylenterephtalat), PE (Polyethylen), PBS (Polybutylensuccinat), PU (Polyurethan), PC (Polycarbonat), PVC (Polyvinylchlorid) und jedem thermoplastischen Material aus Fasern oder Filamenten, deren Schmelztemperatur höchstens so hoch wie, insbesondere im Wesentlich niedriger als die Degradationstemperatur der für den Kernfaden ausgewählten Pflanzenfasern ist, ausgewählt ist.

9. Verbundmaterial (4, 10) nach einem der Ansprüche 6 bis 8, umfassend eine durch Formen zumindest eines Verbundfadens (3) gefertigte Textilstruktur (4), wobei die Textilstruktur (4) aus einem oder mehreren unidirektionalen Fäden, einem Gewebe, einem Gestrick, einem Geflecht, einem Vlies, einer Filamentwicklung oder einer ganz oder teilweise aus selbigen ausgebildeten Zusammensetzung besteht.

10. Verbundmaterial (10) nach dem vorangehenden Anspruch, das auf zumindest einer Seite (6; 7) der Textilstruktur in eine ein zusätzliches thermoplastisches Material (5) aufweisende Matrix (8) eingebracht wird.

11. Gegenstand, insbesondere Schirm, Möbel, Gepäckware, Anordnungs- oder Verkleidungsprodukt, der zumindest einen mit Hilfe zumindest eines Verbundmaterials (3, 4, 10) nach einem der Ansprüche 6 bis 10 verstärkten Teil aufweist.

## Claims

1. Method for producing a composite material (3, 4, 10), comprising the following steps:
a) producing at least one spun yarn (1) of plant fibres;
b) coating said at least one spun yarn by winding fibres or filaments of a thermoplastic material (2) so as to form a composite yarn;
c) heating said composite yarn (3) until said thermoplastic material melts.

2. Production method according to claim 1, comprising the step of forming at least one composite yarn (3) into a textile structure (4), this forming step being implemented before step c) of heating said composite yarn (3) so as to allow the melting of the thermoplastic material (2).

3. Production method according to claim 2, wherein the forming step is selected from the group comprising unidirectional bonding, weaving, braiding, winding and knitting, the textile structure (4) being formed by one or more unidirectional yarns, a woven fabric, a knitted fabric, a braided fabric, a non-woven fabric, a filament winding or a composition formed from all or part thereof.

4. Method for producing a composite material (10) according to claim 2 or 3, comprising, after the forming step and after or during step c) of heating the composite yarn (3), a step of complete or partial insertion, in particular hot and under pressure, of the textile structure (4) in a mould (8) containing a complementary thermoplastic material (5), in particular compatible with or identical to the thermoplastic material (2) of the composite yarn (3), the mould being present on at least one face (6; 7) of the textile structure (4).

5. Method for producing a composite material (10) according to claim 4, **characterised in that** insertion in the complementary thermoplastic material (5) takes place on both faces (6, 7) of the textile structure (4).

6. Composite material (3, 4, 10) obtained using the production method according to any of claims 1 to 5 and comprising at least one composite yarn (3) with at least a core made from a spun yarn (1) of plant fibres and a sheath formed by winding fibres or filaments of the thermoplastic material (2) around the core, heated until the thermoplastic material melts.

7. Composite material (3, 4, 10) according to the preceding claim, wherein the plant fibres are selected from the group comprising linen, hemp, cotton, sisal, jute, nettle, coconut and any plant fibre able to be spun.

8. Composite material (3, 4, 10) according to one of the two immediately preceding claims, wherein the thermoplastic material (2) is produced from renewable resources and is selected from the group comprising PLA (polylactic acid), PHA (polyhydroxy alcanoate), PET (polyethylene terephthalate), PA (polyamide), PP (polypropylene), PBT (polybutylene terephthalate), PE (polyethylene), PBS (polybutylene succinate), PU (polyurethane), PC (polycarbonate), PVC (polyvinyl chloride) and any thermoplastic material in fibres or filaments, the melting temperature of which is at most equal to and in particular substantially lower than the degradation temperature of the plant fibres selected for the core yarn.

9. Composite material (4, 10) according to any of claims 6 to 8, comprising a textile structure (4) made by forming at least one composite yarn (3), the textile structure (4) consisting of one or more unidirectional yarns, a woven fabric, a knitted fabric, a braided fabric, a non-woven fabric, a filament winding or a composition formed from all or part thereof.

10. Composite material (10) according to the preceding claim, inserted, on at least one face (6; 7) of the textile structure, in a mould (8) containing a complementary thermoplastic material (5).

11. Object, in particular screen, furniture, luggage, arrangement or coating product, comprising at least one part reinforced using at least one composite material (3, 4, 10) according to any of claims 6 to 10.
